Europäisches Patentamt

European Patent Office

Office européen des brevets

(11) Veröffentlichungsnummer : **0 349 818 B1**

# (12) EUROPÄISCHE PATENTSCHRIFT

(45) Veröffentlichungstag der Patentschrift :
**26.08.92 Patentblatt 92/35**

(51) Int. Cl.$^5$ : **C08F 212/04,** C08F 220/28, C09D 125/14

(21) Anmeldenummer : **89111114.8**

(22) Anmeldetag : **19.06.89**

(54) **Hydroxylgruppenhaltige Copolymerisate auf der Basis von Vinylester-, Vinylaromat- und Hydroxylalkylester-Monomeren, Verfahren zu ihrer Herstellung sowie ihre Verwendung in Beschichtungsmitteln.**

Verbunden mit 89907137.7/0424412 (europäische Anmeldenummer/Veröffentlichungsnummer) durch Entscheidung vom 30.10.91.

(30) Priorität : **07.07.88 DE 3823005**

(43) Veröffentlichungstag der Anmeldung :
**10.01.90 Patentblatt 90/02**

(45) Bekanntmachung des Hinweises auf die Patenterteilung :
**26.08.92 Patentblatt 92/35**

(84) Benannte Vertragsstaaten :
**AT BE CH DE ES FR GB IT LI LU NL SE**

(56) Entgegenhaltungen :
DE-A- 2 032 647
DE-A- 2 422 043
DE-A- 2 615 101

(73) Patentinhaber : **BASF Lacke + Farben Aktiengesellschaft Max-Winkelmann-Strasse 80 W-4400 Münster (DE)**

(72) Erfinder : **Jung, Werner Alfons, Dr. Uhrwerkerstr. 65 W-4715 Ascheberg (DE)**
Erfinder : **Vorbeck, Udo 2350 Old Stone Court, no. 7 Toledo, OH 43614 (US)**

(74) Vertreter : **Leifert, Elmar, Dr. BASF Lacke + Farben AG Patentabteilung Max-Winkelmann-Strasse 80 Postfach 61 23 W-4400 Münster (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft in organischen Lösungsmitteln lösliche, hydroxylgruppenhaltige Copolymerisate, die mittels radikalischer Lösungspolymerisation von Vinylester-, Vinylaromat- und Hydroxyalkylester-Monomeren sowie ggf. weiteren copolymerisierbaren Monomeren herstellbar sind, Verfahren zu Ihrer Herstellung sowie ihre Verwendung in Beschichtungsmitteln. Hydroxylgruppenhaltige Acrylatpolymerisate sind gut bekannt, ebenso Beschichtungsmittel, die diese Polymerisate als wesentliche Bindemittelkomponente enthalten (vgl. beispielsweise EP-A-103 199, EP-A-52 233, EP-B-39 797, EP-A-136 667, EP-B-64 338).

Bekannt ist weiterhin, daß Probleme bei der Herstellung von Acrylatcopolymerisaten auftreten, wenn Monomere mit im Vergleich zu Acrylatmonomeren stark unterschiedlicher Reaktivität, wie z.B. Vinylester von in $\alpha$-Stellung verzweigten, aliphatischen Monocarbonsäuren mit 5 bis 15 C-Atomen, eingesetzt werden. In diesen Fällen gelingt es schwer, einheitliche, d.h. statistisch homogen verteilte Copolymere zu erhalten.

Eine Lösungsmöglichkeit dieses Problems ist das in der US-PS 4,039,734 beschriebene Verfahren zur Copolymerisation unterschiedlich reaktiver Monomerer, bei dem wenigstens ein Teil des reaktiven Monomers in solch einer Menge kontinuierlich zu der Reaktionsmischung hinzugegeben wird, daß das relative Monomerenverhältnis konstant bleibt. Die hierfür jeweils erforderliche Monomerenmenge wird mit Hilfe der frei werdenden Reaktionswärme ermittelt.

Bei dem in der DE-PS 20 32 647 beschriebenen Verfahren werden einheitliche Vinylester-, Vinylaromat- und Hydroxyacrylat-Copolymerisate entsprechend durch stufenweise Zugabe der einzelnen Monomeren erhalten. Bei diesem Verfahren wird die Gesamtmenge Vinylester zusammen mit 5 bis 15 Gew.-% der Gesamtmenge des Vinylaromaten und der Gesamtmenge der anderen hydroxyfunktionellen Monomeren und ungesättigten Carbonsäuren vorgelegt. Die restliche Monomerenmenge wird dann entweder als Ganzes allmählich zugefügt oder aber so zudosiert, daß der Zulauf der OH- und COOH-Monomeren zeitlich länger dauert als der Vinylaromatenzulauf. Nachteilig bei diesem Verfahren sind der sehr hohe Restmonomerengehalt (d.h. die Menge nicht umgesetztes Ausgangsmonomer, ausgedrückt in Gew.-%, bezogen auf die ursprünglich eingesetzte Gesamtmenge dieses Monomers) von bis zu 40 Gew.-% an Vinylester bei Verwendung eines hohen Vinylaromatenanteils (bis zu 50 Gew.-%) und die damit verbundenen Toxizitäts-Probleme. Weiterhin ungünstig im Hinblick auf die Lösemittelbelastung der Umgebung beim Trocknen der Lackfilme ist der durch die hohe Viskosität der Bindemittellösungen verursachte hohe Lösungsmittelanteil der Beschichtungsmittel. Zusätzlich besteht die Gefahr von Trübungserscheinungen bei Polymerlösungen mit höherem Festkörpergehalt, die nur durch Zugabe weiterer Lösungsmittels beseitigt werden können. Auch die englischsprachige technische Information "VeoVa polymers LR-40 and LR-2041 for water-thinnable paints" der Firma Shell beschreibt derartige Vinylester, Vinylaromat und Hydroxyalkylester enthaltende Copolymerisate, die allerdings ebenfalls die gerade oben genannten Nachteile aufweisen.

Schließlich sind auch einige Massenpolymerisationsverfahren zur Herstellung von Vinylester enthaltenden Copolymerisaten bekannt, bei denen ebenfalls die Gesamtmenge des Vinylesters, ggf. mit einem Teil der Gesamtmenge der anderen Monomeren und ggf. Initiator erhitzt wird und dann die übrige Menge an Monomeren und Initiator allmählich zugesetzt wird (vgl. z.B. DE-PS 24 22 043 und DE-OS 26 15 101). Bei diesen Verfahren gelingt es zwar, den Vinylester vollständig einzubauen (Restmonomerengehalt < 10 Gew.-%), jedoch sind die so erhaltenen Copolymerisatlösungen nach dem Anlösen der Polymermasse trübe und für Lackformulierungen nicht geeignet.

Der Erfindung lag somit die Aufgabe zugrunde, hydroxylgruppenhaltige Copolymerisate auf der Basis von Vinylester-, Vinylaromat- und Hydroxyalkylester-Monomeren sowie ggf. weiterer copolymerisierbarer Monomerer zur Verfügung zu stellen, die mittels eines einfachen Verfahrens herstellbar sind, die auch bei Verwendung eines hohen Vinylaromatenanteils von bis zu 50 Gew.-%, bezogen auf die Gesamtmonomerenmenge, einen niedrigen Restmonomerengehalt (<10 Gew.-%) aufweisen und die klare Lösungen ergeben. Die unter Verwendung dieser Copolymerisate hergestellten Beschichtungsmittel sollten bei einer für die Verarbeitung günstigen Viskosität von 16 bis 20 s, gemessen im Auslaufbecher nach DIN 4, einen möglichst hohen Festkörpergehalt aufweisen, gute Pigmentierbarkeit zeigen und zu Überzügen mit guten technologischen Eigenschaften, insbesondere guter Härte, führen.

Überraschenderweise wird diese Aufgabe durch ein hydroxylgruppenhaltiges und ggf. amino- und/oder carboxylgruppenhaltiges Copolymerisat (A) gelöst, das mittels radikalischer Lösungspolymerisation herstellbar ist und das dadurch gekennzeichnet ist, daß das Copolymerisat (A) eine OH-Zahl von 50 bis 200 mg KOH/g und ein mittleres Molekulargewicht (Zahlenmittel) von 1500 bis 6000 aufweist und herstellbar ist durch radikalische Lösungspolymerisation bei Temperaturen von 130 bis 200°C von

$a_1$) 5 bis 25 Gew.-% eines oder mehrerer Vinylester von Monocarbonsäuren,

$a_2$) 10 bis 50 Gew.-% eines oder mehrerer vinylaromatischer Kohlenwasserstoffe

$a_3$) 10 bis 40 Gew.-% eines oder mehrerer Hydroxyalkylester $\alpha,\beta$-ungesättigter Carbonsäuren und/oder eines Umsetzungsprodukts aus 1 Mol Hydroxyethylacrylat und/oder Hydroxyethylmethacrylat und durchschnittlich 2 Mol $\varepsilon$-Caprolacton und/oder einem Umsetzungsprodukt von Acrylsäure und/oder Methacrylsäure mit dem Glycidylester einer Carbonsäure mit einem tertiären $\alpha$-Kohlenstoffatom oder anstelle des Umsetzungsproduktes von Acryl- und/oder Methacrylsäure mit dem Glycidylester Acryl- und/oder Methacrylsäure, wobei die Acryl- und/oder Methacrylsäure in diesem Fall während oder nach der Polymerisationsreaktion mit dem Glycidylester einer Carbonsäure mit einem tertiären $\alpha$-Kohlenstoffatom umgesetzt wird,

$a_4$) 0 bis 40 Gew.-% anderer ethylenisch ungesättigter, copolymerisierbarer Monomerer, wobei die Summe der Komponenten $a_1$ bis $a_4$ jeweils 100 Gew.-% ergibt,

wobei bei Einsatz von Carbonsäure darauf zu achten ist, daß die Säurezahl des fertigen Polyacrylats im Bereich von 5 bis 30 mg KOH/g liegt und wobei

1.) mindestens 60 Gew.-% der Gesamtmenge der Komponente $a_1$ vorgelegt werden,

2.) die Komponenten $a_2$ bis $a_4$ und der ggf. vorhandene Rest der Komponente $a_1$ innerhalb eines für alle Komponenten gleich langen Monomerenzugabezeitraumes so zudosiert werden, daß

i) die pro Zeiteinheit zugegebene Menge der Komponente $a_1$ innerhalb des Monomerenzugabezeitraumes konstant bleibt oder abnimmt,

ii) die pro Zeiteinheit zugegebene Menge der Komponenten $a_3$ und $a_4$ innerhalb des Monomerenzu- gabezeitraumes konstant bleibt und

iii) die innerhalb des ersten Drittels des Monomerenzugabezeitraumes zugegebene Menge der Komponente $a_2$ 15 bis 30 Gew.-% der Gesamtmenge der Komponente $a_2$, innerhalb des zweiten Drittels 25 - 40 Gew.-% und innerhalb des letzten Drittels 35 - 60 Gew.-% der Gesamtmenge der Komponente $a_2$ beträgt. Als Komponente a1 werden Vinylester von Monocarbonsäuren, bevorzugt Vinylester von in $\alpha$-Stellung verzweigten Monocarbonsäuren mit 5 bis l5 C-Atomen je Molekül, eingesetzt. Die verzweigten Monocarbonsäuren können erhalten werden durch Umsetzen von Ameisensäure oder Kohlenmonoxid und Wasser mit Olefinen in Anwesenheit eines flüssigen, stark sauren Katalysators; die Olefine können Crackprodukte von paraffinischen Kohlenwasserstoffen, wie Mineralölfraktionen sein und können sowohl verzweigte wie geradkettige acyclische und/oder cycloaliphatische Olefine enthalten. Bei der Umsetzung solcher Olefine mit Ameisensäure bzw. mit Kohlenmonoxid und Wasser entsteht ein Gemisch aus Carbonsäuren, bei , denen.die Carboxylgruppen vorwiegend an einem quaternären Kohlenstoffatom sitzt. Andere olefinische Ausgangsstoffe sind z. B. Propylentrimer, Propylentetramer und Diisobutylen. Die Vinylester können auch auf an sich bekannte Weise aus den Säuren hergestellt werden, z.B. indem man die Säuren mit Acetylen reagieren läßt.

Besonders bevorzugt werden - wegen der guten Verfügbarkeit - Vinylester von gesättigten aliphatischen Monocarbonsäuren mit 9 - 11 C-Atomen, die am $\alpha$-C-Atom verzweigt sind. Besonders bevorzugt ist außerdem der Vinylester der p-Tertiärbutyl-benzoesäure. Beispiele für weitere, geeignete Vinylester sind Vinylacetat und Vinylpropionat.

Die Menge der Komponenten $a_1$ beträgt 5 bis 25 Gew.-%, bevorzugt 10 bis 19 Gew.-%.

Die Komponente $a_2$ ist eine monovinylaromatische Verbindung. Vorzugsweise enthält sie 8 bis 9 Kohlenstoffatome je Molekül. Beispiele für geeignete Verbindungen sind Styrol, Vinyltoluole, $\alpha$-Methylstyrol, Chlorstyrole, o-, m- oder p-Methylstyrol 2,5-Dimethylstyrol, p-Methoxystyrol, p-tert.-Butylstyrol, p-Dimethylaminostyrol, p-Acetamidostyrol und m-Vinylphenol. Bevorzugt werden Vinyltoluole sowie insbesondere Styrol eingesetzt. Die Menge an Komponente $a_2$ beträgt 10 bis 50 Gew.-%, bevorzugt 20 bis 45 Gew.-.%.

Als Komponente $a_3$ kommen Hydroxyalkylester $\alpha,\beta$-ungesättigter Carbonsäuren mit primären oder sekundären Hydroxylgruppen in Frage. Ist eine hohe Reaktivität des Acrylatcopolymerisats erwünscht, können ausschließlich Hydroxyalkylester mit primären Hydroxylgruppen eingesetzt werden; soll das Polyacrylat weniger reaktiv sein, können ausschließlich Hydroxyalkylester mit sekundären Hydroxylgruppen eingesetzt werden. Selbstverständlich können auch Mischungen von Hydroxyalkylestern mit primären Hydroxylgruppen und Hydroxyalkylestern mit sekundären Hydroxylgruppen verwendet werden. Beispiele für geeignete Hydroxyalkylester $\alpha,\beta$-ungesättigter Carbonsäuren mit primären Hydroxylgruppen sind Hydroxyethylacrylat, Hydroxypropylacrylat, Hydroxybutylacrylat, Hydroxyamylacrylat, Hydroxyhexylacrylat, Hydroxyoctylacrylat und die entsprechenden Methacrylate. Als Beispiele für verwendbare Hydroxyalkylester mit einer sekundären Hydroxylgruppe seien 2-Hydroxypropylacrylat, 2-Hydroxybutylacrylat, 3-Hydroxybutylacrylat und die entsprechenden Methacrylate genannt.

Selbstverständlich können jeweils auch die entsprechenden Ester anderer, $\alpha,\beta$-ungesättigter Carbonsäuren wie z.B. der Crotonsäure und der Isocrotonsäure eingesetzt werden.

Vorteilhafterweise kann die Komponete $a_3$ zumindest teilweise ein Umsetzungsprodukt aus einem Mol Hydroxyethylacrylat und/oder Hydroxyethylmethacrylat und durchschnittlich zwei Mol $\varepsilon$ -Caprolacton sein.

Als Komponente $a_3$ kann zumindest teilweise auch ein Umsetzungsprodukt aus Acrylsäure und/oder Methacrylsäure mit dem Glycidylester einer Carbonsäure mit einem tertiären $\alpha$-Kohlenstoffatom eingesetzt werden. Glycidylester stark verzweigter Monocarbonsäuren sind unter dem Handelsnamen "Cardura" erhältlich. Die Umsetzung der Acrylsäure oder Methacrylsäure mit dem Glycidylester einer Carbonsäure mit einem tertiären $\alpha$-Kohlenstoffatom kann vor, während oder nach der Polymerisationsreaktion erfolgen. Es ist darauf zu achten, daß die Säurezahl des fertigen Polyacrylats im Bereich von 5 bis 30 mg KOH/g, bevorzugt 8 bis 25 mg KOH/ g liegt.

Die Komponente $a_3$ wird in einer Menge von 10 bis 40 Gew.-%, bevorzugt 15 bis 35 Gew.-%, eingesetzt.

Zum Aufbau des hydroxylgruppenhaltigen Copolymerisats (A) können außerdem 0 bis 40 Gew.-% anderer, ethylenisch ungesättigter, copolymerisierbarer Monomerer (Komponente $a_4$) eingesetzt werden. Die Auswahl dieser Monomerer ist nicht besonders kritisch. Es ist aber darauf zu achten, daß der Einbau dieser Monomeren nicht zu unerwünschten Eigenschaften des Copolymerisats führt. So richtet sich die Auswahl der Komponente $a_4$ weitgehend nach den gewünschten Eigenschaften der härtbaren Zusammensetzung in bezug auf Elastizität, Härte, Verträglichkeit und Polarität.

Bevorzugt werden als Komponente $a_4$ Alkylester von olefinisch ungesättigten Carbonsäuren eingesetzt. Beispiele hierfür sind Methyl(meth)acrylat, Ethyl(meth)acrylat, Propyl(meth)acrylat, Butyl(meth)acrylat, Isopropyl(meth)acrylat, Isobutyl(meth)acrylat, Pentyl(meth)acrylat, Isoamyl(meth)acrylat, Hexyl(meth)acrylat, Cyclohexyl(meth)acrylat, 2-Ethylhexyl(meth)acrylat, Octyl(meth)acrylat, 3,5,5-Trimethylhexyl(meth)acrylat, Decyl(meth)-acrylat, Dodecyl(meth)acrylat, Hexadecyl(meth)acrylat, Octadecyl(meth)acrylat, Octadecenyl(meth)acrylat sowie die entsprechenden Ester der Malein-, Fumar-, , Croton-, Isocroton-, Vinylessig- und Itaconsäure.

Geeignet als Komponente $a_4$ sind weiterhin andere ethylenisch ungesättigte Verbindungen, wie beispielsweise Alkoxyethylacrylate, Aryloxyethylacrylate und die entsprechenden Methacrylate, wie z.B. Butoxyethyl(meth)acrylat, Phenoxyethyl(meth)acrylat; ungesättigte Carbonsäuren wie, z.B. Acrylsäure, Methacrylsäure, Itaconsäure, Crotonsäure und Halbester der Malein- und Fumarsäure sowie deren Mischungen; ungesättigte Verbindungen mit tertiären Aminogruppen, wie z.B. N,N'-Diethylaminoethylmethacrylat, 2-Vinylpyridin, 4-Vinylpyridin, Vinylpyrrolin, Vinylchinolin, Vinylisochinolin, N,N'-Dimethylaminoethylvinylether und 2-Methyl-5-vinylpyridin; Verbindungen wie z.B. Acrylnitril, Methacrylnitril, Acrolein und Methacrolein.

Die Polymerisation der Monomerkomponenten $a_1$ bis $a_4$ wird vorzugsweise unter Ausschluß von Sauerstoff, z.B. durch Arbeiten in einer Stickstoff-Atmosphäre, durchgeführt. Der Reaktor ist mit entsprechenden Rühr-, Heiz- und Kühleinrichtungen sowie mit einem Rückflußkühler, in dem flüchtige Bestandteile, wie z.B. Styrol, zurückgehalten werden, ausgerüstet. Die Polymerisationsreaktion wird bei Temperaturen von 130 - 200°C, bevorzugt 150 - 180°C, unter Verwendung von Polymerisationsinitiatoren und ggf. Polymerisationsreglern durchgeführt.

Geeignete radikalische Initiatoren sind organische Peroxide, wie z.B. Dibenzoylperoxid, Dicumylperoxid, Cumolhydroperoxid, Di-tert.-butylperoxid, tert.-Butylhydroperoxid, 2,2-Di-tert.-butylperoxybutan, tert.-Amylperbenzoat, 1,3-Bis(tert.-butylperoxyisopropyl)-benzol, Diisopropylbenzolmonohydroperoxid und Diacylperoxide, wie z.B. Diacetylperoxid, Peroxyketal, wie z.B. 2,2-Di-(tert.-amylperoxy)-propan und Ethyl-3,3-di-(tert.-amylperoxy)-butyrat, thermolabile hochsubstituierte Ethanderivate, beispielsweise auf Basis silylsubstituierter Ethanderivate und auf Basis Benzpinakol. Weiterhin können auch aliphatische Azoverbindungen, wie beispielsweise Azobiscyclohexannitril, eingesetzt werden. Je nach eingesetzten Monomeren besteht bei Verwendung von Azoverbindungen allerdings die Gefahr von Gelbfärbungen der Polymeren, die - je nach Verwendungszweck der Polymeren - störend sein können, so daß in diesen Fällen andere Initiatoren eingesetzt werden müssen. Die Initiatormenge beträgt in den meisten Fällen 0,1 bis 5 Gew.-%, bezogen auf die zu verarbeitende Monomerenmenge, sie kann ggf. aber auch höher liegen. Der Initiator, gelöst in einem Teil des für die Polymerisation eingesetzten Lösungsmittels, wird allmählich während der Polymerisationsreaktion zudosiert. Bevorzugt dauert der Initiatorzulauf etwa 1 bis 2 Stunden länger als der Monomerenzulauf, um so auch eine gute Wirkung während der Nachpolymerisationsphase zu erzielen. Werden Initiatoren mit nur einer geringen Zerfallsrate unter den vorliegenden Reaktionsbedingungen eingesetzt, so ist es auch möglich, den Initiator vorzulegen.

Bevorzugt wird die Reaktion in Gegenwart von Polymerisationsreglern durchgeführt, da so Trübungen der Polymerlösungen besser vermieden werden können. Als Regler eignen sich vorzugsweise Mercaptoverbindungen, wobei besonders bevorzugt Mercaptoethanol eingesetzt wird. Andere mögliche Regler sind beispielsweise Alkylmercaptane, wie z.B. t-Dodecylmercaptan, Octylmercaptan, Phenylmercaptan, Octyldecylmercaptan, Butylmercaptan, Thiocarbonsäuren, wie etwa Thioessigsäure oder Thiomilchsäure.

Diese Regler werden in einer Menge von bis zu 2 Gew.-%, bezogen auf die zu verarbeitende Monomerenmenge, eingesetzt. Vorzugsweise werden sie in einem der Monomerenzuläufe gelöst und mit den Monomeren zugegeben. Bevorzugt ist die zugegebene Reglermenge zeitlich konstant.

Die Polymerisation wird in einem hochsiedenden, organischen, gegenüber den eingesetzten Monomeren inerten, Lösungsmittel durchgeführt. Beispiele für geeignete Lösungsmittel sind hochsiedende Alkohole, wie z.B. n-Hexanol, 2-Ethylhexanol, Isooctylalkohol, Isononylalkohol, Isodecylalkohol, Isotridecylalkohol, Cyclohexanol, Methylcyclohexanol, Benzylalkohol, Methylbenzylalkohol, Tetrahydrofufurylalkohol, Diacetonalkohol, 2,6-Dimethyl-4-heptanol, 4-Methyl-2-pentanol, Tridecanol ; Glykole und Glykolderivate, wie z.B. Ethylenglykol, 1,2-Propylenglykol, 1,3-Butylenglykol, Butandiol-1,4, Hexylenglykol, 2-Ethylhexandiol-1,3, Diethylenglykol, Triethylenglykol, Dipropylenglykol, Methyldiglykol, Ethyldiglykol, Butyldiglykol, Hexyldiglykol, Tripropylenglykolmethylether, Methoxytriglykol, Ethylglykolacetat, Butylglykolacetat, Ethyldiglykolacetat, Ethylenglykoldiacetat; höher substituierte Aromaten, wie z.B. Solvent Naphtha®, Schwerbenzol, verschiedene Solvesso®- Typen, verschiedene Shellsol®-Typen und Deasol® sowie höhersiedende aliphatische und cycloaliphatische Kohlenwasserstoffe, wie z.B. verschiedene Testbenzine, Mineralterpentinöl, Tetralin und Dekalin. Bei bestimmten Monomerkombinationen (wie z.B. aminofunktionelle plus carboxylfunktionelle Monomere) sollten nur inerte Lösungsmittel, wie aromatische und aliphatische Kohlenwasserstoffe oder Ester eingesetzt werden.

Werden die hydroxylgruppenhaltigen Copolymerisate (1) in einer 2. Stufe noch modifiziert, z.B. durch Umsetzen mit Verbindungen (B), die pro Molekül durchschnittlich 0,8 bis 1,5 freie NCO-Gruppen und mindestens eine tertiäre Aminogruppe enthalten, so muß das bei der Polymerisation, also Herstellung der Polymeren (A), eingesetzte Lösungsmittel selbstverständlich auch gegenüber den Verbindungen (B) inert sein.

Es ist erfindungswesentlich, daß die Copolymerisation der Komponenten $a_1$ bis $a_4$ folgendermaßen durchgeführt wird:

In dem Reaktor werden zunächst mindestens 60 % Gew.-%, bevorzugt 100 Gew.-%, der insgesamt einzusetzenden Menge der Komponente $a_1$ zusammen mit einem Teil der insgesamt einzusetzenden Lösungsmittelmenge vorgelegt und auf die jeweilige Reaktionstemperatur aufgeheizt. Die restliche Menge des Lösungsmittels wird - wie bereits beschreiben - vorzugsweise zusammen mit dem Katalysator allmählich zugefügt. Die ggf. noch vorhandene restliche Menge der Komponente $a_1$ sowie die übrigen Monomeren (Komponenten $a_2$, $a_3$ und $a_4$) werden innerhalb eines für alle Komponenten gleich langen Monomerenzugabezeitraumes (beträgt i.a. 2 - 10h, wie für Acrylatcopolymerisationen üblich) zu der vorgelegten Komponente $a_1$ folgendermaßen zudosiert:

i) Die pro Zeiteinheit zugegebene Menge der ggf. noch vorhandenen Komponente $a_1$ (d.h. die Restmenge der Komponente $a_1$, die nicht vorgelegt wurde) bleibt innerhalb des Monomerenzugabezeitraumes konstant oder nimmt ab, wobei die letzte Verfahrensvariante bevorzugt ist. Im Fall einer konstanten Zugabemenge wird die Komponente $a_1$ bevorzugt zusammen mit den Komponenten $a_3$ und $a_4$ zudosiert.

ii) Die pro Zeiteinheit zugegebene Menge der Komponenten $a_3$ und $a_4$ bleibt innerhalb des Monomerenzugabezeitraumes konstant.

iii) Die pro Zeiteinheit zugegebene Menge der Komponente $a_2$ wird innerhalb des Monomerenzugabezeitraumes so variiert, daß die innerhalb des ersten Drittels des Monomerenzugabezeitraumes insgesamt zugegebene Menge der Komponente $a_2$ 15 bis 30 Gew.-%, bevorzugt 18 bis 26 Gew.-%, der Gesamtmenge der Komponente $a_2$ beträgt. Innerhalb des zweiten Drittels des Monomerenzugabezeitraumes werden insgesamt 25 bis 40 Gew.-%, bevorzugt 30 bis 38 Gew.-% und innerhalb des letzten Drittels des Monomerenzugabezeitraumes werden 35 bis 60 Gew.-%, bevorzugt 40 bis 50 Gew-.%, der Gesamtmenge der Komponente $a_2$ zudosiert, wobei selbstverständlich die Summe der Zugabemengen im 1., 2 und 3. Drittel 100 Gew.-% beträgt.

Für die Variation der pro Zeiteinheit zugegebenen Menge der Komponente $a_2$ bestehen verschiedene Möglichkeiten, entscheidend ist nur, daß die oben angegebenen, im jeweiligen Drittel insgesamt zugegebenen Mengen eingehalten werden. So besteht beispielsweise die Möglichkeit einer stufenweisen Veränderung der pro Zeiteinheit zugegebenen Menge der Komponente $a_2$. Die Zahl der Stufen, bei denen die Zugabemenge jeweils geändert wird, kann beliebig gewählt werden. So kann beispielsweise die Zugabemenge pro Zeiteinheit der Komponente $a_2$ nur zu Beginn des zweiten und/oder zu Beginn des dritten Drittels erhöht werden. Innerhalb des Drittels bleibt die Zugabemenge pro Zeiteinheit dann jeweils konstant. Es ist aber auch möglich, die pro Zeiteinheit zugegebene Menge der Komponente $a_2$ kontinuierlich zu verändern, entsprechend dem Grenzfall einer unendlichen Stufenzahl.

Die Zugabe der Komponenten in der genannten Weise fördert, wie angenommen wird, die Copolymerisation und reduziert die Homopolymerisation der Einzelkomponenten. Zusätzlich werden Copolymerisate mit einem sehr niedrigen Restmonomerengehalt erhalten, die klare Lösungen mit einem hohen Festkörpergehalt ergeben. Die so erhaltenen hydroxylgruppenhaltigen Copolymerisate (A) weisen ein mittleres Molekulargewicht (Zahlenmittel) von 1500 bis 6000 und eine OH-Zahl von 50 bis 200 mg KOH/g, bevorzugt 70 bis 150 mg KOH/g und eine Aminzahl von 1 bis 10 mg KOH/g, bevorzugt 1 bis 5 mg KOH/g, auf. 50 %ige Lösungen der erfindungsgemäßen Copolymeren in Butylacetat haben typischerweise Viskositäten von 0,2 bis 4 dPas bei 23°C.

Außer durch Verwendung von tert. Aminogruppen enthaltenden Monomeren bei der Copolymerisation können tert. Aminogruppen in das hydroxylgruppenhaltige Copolymerisat (A) auch durch Umsetzung mit Verbindungen (B), die pro Molekül durchschnittlich 0,8 bis 1,5, vorzugsweise 1, freie Isocyanatgruppen enthalten, eingeführt werden. Dieses Verfahren ist insbesondere dann bevorzugt, wenn die Copolymerisate für die Herstellung von Klarlacken verwendet werden sollen.

Die Umsetzung der Copolymerisate (A) mit den Verbindungen (B) erfolgt in einem isocyanatinerten Lösungsmittel bei Temperaturen von 10 bis 100°C, vorzugsweise 50 bis 80°C, ggf. in Anwesenheit von organischen Zinnverbindungen als Katalysatoren, bis zu einem NCO-Wert von praktisch Null. Die Menge der Verbindung (B) wird dabei so gewählt, daß das entstehende Harz eine Aminzahl von 1 bis 10 mg KOH/g, bevorzugt 1 bis 5 mg KOH/g, aufweist.

Die zur Einführung der tertiären Aminogruppe in das Copolymerisat (A) verwendeten Verbindungen (B) werden hergestellt, indem Diisocyanate oder Polyisocyanate mit einem stöchiometrischen Unterschuß an einem tertiären Amin umgesetzt werden. Geeignet für diese Umsetzung sind tertiäre Amine der allgemeinen Formel $NR_1R_2R_3$, wobei $R_1$ bevorzugt einen Alkanolrest oder einen anderen hydroxylgruppenhaltigen Rest bedeutet und $R_2$ bzw. $R_3$ Alkyl- oder Cycloalkylreste darstellen können. Bevorzugt sind Dialkylalkanolamine, wie z.B. Dimethylethanolamin, Diethylethanolamin sowie deren höhere Homologe bzw. Isomere.

Als Di- oder Polyisocyanate sind beispielsweise geeignet:

Aromatische Isocyanate, wie z. B. 2,4-, 2,6-Toluylendiisocyanat und deren Gemische, 4,4'Diphenylmethandiisocyanat, m-Phenylen-, p-Phenylen-, 4,4'-Diphenyl-, 1,5-Naphthalin-, 1,4-Naphthalin-, 4,4'-Toluidin-, Xylylendiisocyanat sowie substituierte aromatische Systeme, wie z. B. Dianisidindiisocyanate, 4,4'-Diphenyletherdiisocyanate oder Chlorodiphenylendiisocyanate und höherfunktionelle aromatische Isocyanate, wie z. B. 1,3,5-Triisocyanatobenzol, 4,4'-,4''-Triisocyanattriphenylmethan, 2,4,6-Triisocyanatotoluol und 4,4-Diphenyldimethylmethan-2,2', 5,5'-tetraisocyanat; cycloaliphatische Isocyanate, wie z.B. 1,3 Cyclopentan-, 1,4-Cyclohexan-, 1,2-Cyclohexan- und Isophorondiisocyanat; aliphatische Isocyanate, wie z.B. Trimethylen-, Tetramethylen-, Pentamethylen-, Hexamethylen-, Trimethylhexamethylen-1,6-diisocyanat und Tris-hexamethylen-triisocyanat.

Vorzugsweise werden Diisocyanate mit unterschiedlich reaktiven Isocyanatgruppen eingesetzt, wie z. B. Isophorondiisocyanat.

Gegenstand der Erfindung ist auch ein Verfahren zur Herstellung der hydroxylgruppenhaltigen und ggf. amino und/oder carboxylgruppenhaltigen Copolymerisate (A) auf der Basis von Vinylestern, Vinylaromaten, Hydroxyalkylestern $\alpha,\beta$-ungesättigter Carbonsäuren und ggf. weiterer copolymerisierbaren Monomeren nach einem der Ansprüche 1 bis 8 mittels radikalischer Lösungspolymerisation, dadurch gekennzeichnet, daß die Monomeren $a_1$ bis $a_4$ in einem organischen Lösungsmittel bei Temperaturen von 130 bis 200°C unter Verwendung von Polymerisationsinitiatoren und ggf. Polymerisationsreglern copolymerisiert werden, wobei die Copolymerisation derart durchgeführt wird, daß

1.) mindestens 60 Gew.-% der Gesamtmenge der Komponente $a_1$ vorgelegt werden,

2.) die Komponenten $a_2$ bis $a_4$ und der ggf. vorhandene Rest der Komponente $a_1$ innerhalb eines für alle Komponenten gleich langen Monomerenzugabezeitraumes so zudosiert werden, daß

i) die pro Zeiteinheit zugegebene Menge der Komponente $a_1$ innerhalb des Monomerenzugabezeitraumes konstant bleibt oder abnimmt,

ii) die pro Zeiteinheit zugegebene Menge der Komponenten $a_3$ und $a_4$ innerhalb des Monomerenzugabezeitraumes konstant bleibt und

iii) die innerhalb des ersten Drittels des Monomerenzugabezeitraumes zugegebene Menge der Komponente $a_2$ 15 bis 30 Gew.-% der Gesamtmenge der Komponente $a_2$, innerhalb des zweiten Drittels 25 - 40 Gew.-% und innerhalb des letzten Drittels 35 - 60 Gew.-% der Gesamtmenge der Komponente $a_2$ beträgt.

Die in diesem Verfahren einsetzbaren Komponenten $a_1$ bis $a_4$ sowie die Durchführung des erfindungsgemäßen Verfahrens sind bereits ausführlich im Zusammenhang mit den erfindungsgemäßen Copolymerisaten (A) beschrieben, so daß hier nur auf diese Beschreibung verwiesen wird.

Gegenstand der vorliegenden Erfindung sind weiterhin Beschichtungsmittel, die die erfindungsgemäßen, hydroxylgruppenhaltigen Copolymerisate als Bindemittelkomponente enthalten. Als Härterkomponente eignen sich in diesen Beschichtungsmitteln Aminoplastharze, Polyisocyanate sowie Anhydridgruppen enthaltende Verbindungen. Der Vernetzer wird jeweils in solch einer Menge zugesetzt, daß das Molverhältnis der OH-Gruppen des Copolymerisats (A) zu den reaktiven Gruppen des Vernetzers zwischen 0,3 : 1 und 3 : 1 liegt.

Als Härterkomponente geeignete Aminoplastharze sind bevorzugt Melamin und/oder Benzoguanaminharze. Es handelt sich hierbei um veretherte Melamin- bzw. Benzoguanamin-Formaldehyd-Kondensationsprodukte. Die Verträglichkeit der Harze mit anderen Filmbildnern und Lösemitteln wird von der Kettenlänge des Veretherungsalkohols und dem Veretherungsgrad beeinflußt. Hauptsächliche Veretherungskomponenten sind n- und Isobutanol sowie Methanol. Eine sehr große Bedeutung haben die Hexamethoxymethylmelaminharze. Sie weisen aber den Nachteil auf, daß derartige Kombinationen erst bei Temperaturen oberhalb 150°C härten und oft ein Zusatz saurer Katalysatoren erforderlich ist. Die mit weniger Formaldehyd hergestellten und/oder mit sekundären bzw. tertiären Alkoholen veretherten Harze vernetzen dagegen z. T. bereits unterhalb von 100°C. Einsetzbar sind auch die entsprechenden Harnstoff- und Urethanharze.

Die für die Vernetzung der Copolymerisate A) verwendeten Polyisocyanate sind dieselben Polyisocyanate, die auch zur Herstellung der Verbindung (B) eingesetzt werden. Für geeignete Beispiele sei daher auf die Beschreibung der Verbindung (B) verwiesen. Weiterhin können aber die Polyisocyanate auch zu Präpolymeren mit höherer Molmasse verknüpft sein. Zu nennen sind hierbei Addukte aus Toluylendiisocyanat und Trimethylolpropan, ein aus 3 Molekülen Hexamethylendiisocyanat gebildetes Biuret sowie die Trimeren des Hexamethyldiisocyanats und des 3,5,5-Trimethyl-1-isocyanato-3-isocyanatomethylcyclohexans.

Die Menge des eingesetzten Vernetzers wird so gewählt, daß das Verhältnis der Isocyanatgruppen des Vernetzers zu den Hydroxylgruppen der Komponente A) im Bereich von 0,3 : 1 bis 3,5 : 1 liegt.

Kombinationen mit Polyisocyanaten oder Isocyanatgruppen tragenden Harzen vernetzen selbst bei Raumtemperatur schnell.

Eingesetzt werden können aber auch die oben beschriebenen, mit üblichen Verkappungsmitteln, wie z.B. Phenolen, Alkoholen, Acetessigsäureestern, Ketoxim- und ε-Caprolactam, umgesetzten Isocyanate. Diese Kombinationen sind bei Raumtemperatur stabil und härten im allgemeinen erst bei Temperaturen oberhalb von 100°C. In besonderen Fällen, z.B. bei Verwendung von Acetessigsäureestern zur Verkappung, kann auch bereits unter 100°C eine Vernetzung eintreten.

Geeignete Härter sind auch Verbindungen bzw. Harze, die Carbonsäureanhydridgruppen enthalten und die über Esterbildung mit den erfindungsgemäßen Polymeren reagieren. Die Härtungstemperatur hängt von der Reaktivität der im Kombinationspartner enthaltenen Anhydridgruppe ab. So gelingt es z.B. mit polyfunktionellen Verbindungen oder Harzen, Beschichtungsmittel zur Verfügung zu stellen, die bereits bei 80 bis 120°C vernetzen.

Die erfindungsgemäßen Beschichtungsmittel können außerdem übliche Hilfs- und Zusatzstoffe enthalten, wie z.B. Verlaufsmittel, Silikonöle, Weichmacher, wie Phosphorsäureester und Phthalsäureester, Pigmente und Füllstoffe, viskositätskontrollierende Zusätze, Mattierungsmittel, UV-Absorber und Lichtschutzmittel. Diese Beschichtungsmittel können durch Spritzen, Fluten, Tauchen, Walzen, Rakeln oder Streichen auf ein Substrat in Form eines Films aufgebracht werden, wobei der Film anschließend zu einem festhaftenden Überzug gehärtet wird.

Die erfindungsgemäßen Beschichtungsmittel eignen sich - wenn durch entsprechende Wahl der Härterkomponente niedrige Härtungstemperaturen zwischen 20 und 80°C angewandt werden können (s.o.) - für die Reparaturlackierungen von Kraftfahrzeugen sowie insbesondere für die Verwendung als Grundierung und Füllermaterial. Das hydroxylgruppenhaltige Copolymerisat findet auch Verwendung als Bindemittel in Klarlacken oder pigmentierten Decklacken.

Die Erfindung wird in den folgenden Beispielen näher erläutert. Alle Angaben über Teile und Prozentsätze sind Gewichtsangaben, falls nicht ausdrücklich etwas anderes festgestellt wird.

Polyisocyanatlösung 1

Die in den Beispielen eingesetzte Polyisocyanatlösung 1 besteht aus folgenden Komponenten:

| | |
|---|---|
| 33,3 Teile | trimerisiertes Hexamethylendiisocyanat, 90 %-ig in einer 1 : 1-Mischung aus Butylacetat / Solventnaphtha® |
| 15,0 Teile | trimerisiertes Isophorondiisocyanat, 70 %-ig in Solventnaphtha® |
| 22,3 Teile | Butylacetat |
| 15,6 Teile | Butylglykolacetat |
| 3,5 Teile | 3-Methoxybutylacetat |
| 3,5 Teile | Xylol |
| 4,9 Teile | eines handelsüblichen Gemisches aus monocyclischen Terpenen mit einem Siedebereich von 162 bis 182°C |
| 0,9 Teile | Solventnaphtha® |
| 1,0 Teile | Katalysatorlösung (1 Teil Dibutylzinndilaurat, gelöst in 50 Teilen Butylacetat, 44 Teilen Solventnaphtha® und 5 Teilen 3-Methoxybutylacetat) |

Lackverdünnung 1

Die Lackverdünnung 1 besteht aus folgenden Komponenten:

| | |
|---|---|
| 15 Teile | Xylol |
| 13 Teile | Solventnaphtha® |
| 10 Teile | eines handelsüblichen Kohlenwasserstoff-Gemisches mit einem Siedebereich von 135 bis 185°C und einem Aromatengehalt von ca. 16,5%. |

| 50 Teile | Butylacetat |
| 5 Teile | 1-Methoxypropylacetat-2 |
| 3 Teile | Butylglykolacetat |
| 2 Teile | 3-Methoxybutylacetat |
| 2 Teile | eines handelsüblichen Gemisches aus monocyclischen Terpenen mit einem Siedebereich von 162 bis 182°C. |

Beispiel 1

In einem 4-Liter-Edelstahlkessel mit Rührer, Rückflußkühler und Zulaufeinrichtungen werden 201,6 Teile Solventnaphtha® (Gemisch von C3 - C4-Alkylsubstituierten Aromaten) und 264 Teile eines handelsüblichen Gemisches von Vinylestern von gesättigten aliphatischen Monocarbonsäuren mit überwiegend 10 C-Atomen, die am α- C-Atom verzweigt sind, vorgelegt und auf 170°C aufgeheizt.

In den Monomerentank I werden eingewogen und vermischt:

| 120,- | Teile Methylmethacrylat |
| 216,- | Teile Hydroxyethylmethacrylat |
| 2,4 | Teile Dodecylmercaptan |

In den Monomerentank II werden eingewogen:

| 600,- | Teile Styrol |

In den Initiatortank werden eingewogen und vermischt:

| 108,- | Teile Solventnaphtha® |
| 36,- | Teile Di-tert. Butylperoxid |

Der Monomerentank I wird innerhalb von 4,5 h gleichmäßig zudosiert. Der Monomerentank II wird innerhalb von 4,5 h so zudosiert, daß in den ersten 90 min. 100 Teile zudosiert werden, von der 91.ten bis zur 180.ten Minute der Gesamtlaufzeit 200 Teile zudosiert werden und in der restlichen Zulaufzeit 300,- Teile Styrol zudosiert werden. Während des Zulaufs wird die Temperatur im Kessel auf 165 - 170°C gehalten. Nach Beendigung aller Zuläufe werden innerhalb 1 h nochmals

18,-  Teile Solventnaphtha® und

6,-  Teile Di-tert. Butylperoxid aus dem Initiatortank zudosiert. Danach wird noch weitere 2 h bei dieser Temperatur nachpolymerisiert.

Es wird mit 342,- Teilen Butylacetat angelöst. Der Festkörper (1 h 130°C) dieser Copolymerisatlösung 1 beträgt 71 %, die Viskosität (50 %ig in Ethylglykolacetat) 0,85 dPa.s. (gemessen bei 23°C).

Mittels Gaschromatographie wurde der Restgehalt an freiem Vinylester-Monomer in der 71%igen Polymerisatlösung 1 bestimmt. Es wurde ein Restgehalt von 1,5 Gew.-% gefunden. (Dies entspricht einem Restmonomerengehalt von 9,6 Gew.-%, bezogen auf die Gesamtmenge an eingesetztem Vinylester-Monomeren).

Beispiel 2

In einem 4-Liter-Edelstahlkessel mit Rührer, Rückflußkühler und Zulaufeinrichtungen werden 325,6 Teile Shellsol A® (Gemisch von C3 - C 4 Alkylsubstituierte Aromaten) und 360,0 Teile eines handelsüblichen Gemisches von Vinylestern von gesättigten aliphatischen Monocarbonsäure mit überwiegend 10 C-Atomen, die am α-C-Atom verzweigt sind, vorgelegt.

In den Monomerentank I werden eingewogen und vermischt:

| 252,- | Teile n-Butylacrylat |
| 468,- | Teile Hydroxyethylmethacrylat |
| 144,- | Teile Methylmethacrylat |
| 36,- | Teile Methacrylsäure |
| 27,- | Teile Mercaptoethanol In den Monomerentank II wird eingewogen: |
| 540,- | Teile Styrol |

In den Initiatortank werden eingewogen und vermischt:

| 129,6 | Teile Shellsol A® |
| 43,2 | Teile Di-tert. Butylperoxid |

Die Vorlage wird auf 160 - 170°C aufgeheizt und es wird der Inhalt von Monomerentank I und vom Initiatortank innerhalb von 4,5 h gleichmäßig in den Kessel dosiert. Der Inhalt des Monomerentanks II wird innerhalb von 4,5 h so zudosiert, daß in den ersten 90 min 25 % der Styrolmenge, von der 91ten bis zur 180ten Minute 35 % der Styrolmenge und in der restlichen Zulaufzeit 40 % der Styrolmenge zudosiert werden.

Danach werden innerhalb von 1 h aus dem Initiatortank zugegeben:

13,5  Teile Shellsol A®

4,5 Teile Di-tert. Butylperoxid.

Während der Polymerisation wird die Temperatur auf ca. 165°C gehalten.

Danach wird mit 330 Teilen Xylol angelöst und 72,2 Teile eines Monoisocyanats (hergestellt aus 1 Mol Isophorondiisocyanat und 1 Mol Dimethylethanolamin, 50 %ig in Xylol) zugegeben. Nach ca. 4 h bei 60°C ist die Addition des Monoisocyanats vollständig. Es wird mit 189 Teilen Butylacetat angelöst.

Die so erhaltene Copolymerisatlösung 2 hat einen Festkörper von 64,9 % (15' 180°C), und eine Viskosität von 21 dPa.s (original) bzw. 0,8 dPas.s (50 %ig in Butylacetat), jeweils bestimmt bei 23°C. Der Restgehalt an freiem Vinylester-Monomeren in der 65 %igen Lösung wurde mittels Gaschromatographie zu 0,5 - 1,0 Gew.-% bestimmt. Dies entspricht einem Restmonomerengehalt von 3,8 bis 7,6 Gew.-%, bezogen auf die Gesamtmenge an eingesetztem Vinylester-Monomer.

Die erhaltene originale Copolymerisatlösung 2 (64,9 % Festkörper bei 15' 180°C) wird mit Methoxypropylacetat auf 62 % Festkörper verdünnt (Copolymerisatlösung 2 a). Zu 54,35 Teilen einer Tönpaste auf Basis eines handelsüblichen OH-Acrylates (OH-Zahl 150 mg KOH/g) werden 45,65 Teile der Copolymerisatlösung 2 a (62 % Festkörper) gegeben. Diese Stammlacklösung wird im Volumenverhältnis 2 : 1 mit der Polyisocyanatlösung 1 gemischt. Mit 10 Gew.-%, bezogen auf die Stammlacklösung, der Lackverdünnung 1 wird eine Spritzviskosität von 18 s, gemessen im DIN 4-Auslaufbecher, eingestellt. Von diesem Lack 1 wurden Glasaufzüge angefertigt und 30 min bei 60°C eingebrannt. Die Abprüfergebnisse zeigt Tabelle 1.

Weiterhin wurde der Lack 1 auf phosphatierte und mit einem handelsüblichen 2-Komponenten Polyurethan-Füller (OH-Komponenten = polyestermodifiziertes hydroxylgruppenhaltiges Acrylat mit einer OH-Zahl von 140 - 150 mg KOH/g; Isocyanat-Komponente = über Biuretstruktur trimerisiertes Hexamethylendiisocyanat) beschichtete Stahlbleche appliziert und 30 min. bei 60°C eingebrannt. Die Abprüfergebnisse zeigt Tabelle 2.

Vergleichsbeispiel 1

Analog zu der Verfahrensvorschrift gemäß der englischsprachigen technischen Information "Veo Va polymers LR 40 und LR 2041 for water-thinnable paints" der Firma Shell wurde mit der Monomerenmischung aus Beispiel 1 folgendermaßen eine Copolymerisatlösung 3 hergestellt:

In einem 4-Liter-Edelstahlkessel mit Rührer, Rückflußkühler und Zulaufeinrichtungen werden 147 Teile Solventnaphtha®, 165 Teile 2-Methoxypropylacetat-1, 264 Teile eines handelsübliche Gemisches von Vinylestern von gesättigten aliphatischen Monocarbonsäuren mit überwiegend 10 C-Atomen, die am $\alpha$-C-Atomen verzweigt sind, 60 Teile Styrol und 2,4 Teile Di-tert. Butylperoxid vorgelegt und auf 160°C aufgeheizt.

In den Monomerentank werden eingewogen und vermischt:

540,- Teile Styrol

194,4 Teile Hydroxyethylmethacrylat

108,- Teile Methylmethacrylat

In den Initiatortank werden eingewogen und vermischt:

21,6 Teile tert. Butylperbenzoat

64,8 Teile Solventnaphtha®

2,4 Teile Dodecylmercaptan

Monomeren- und Initiatortank werden innerhalb 4,5 h gleichmäßig zudosiert, die Temperatur wird auf 155 - 160°C gehalten. Danach werden innerhalb von 0,5 h

21,6 Teile Hydroxyethylmethacrylat und

12,- Teile Methylmethacrylat

aus dem Monomerentank und

10,8 Teile Solventnaphtha®

3,6 Teile Tert. Butylperbenzoat

aus dem Initiatortank zugegeben.

0,5 h nach dieser Nachdosierung werden nochmals

25,2 Teile Solventnaphtha®

8,4 Teile Tert. Butylperbenzoat

aus dem Initiatortank innerhalb 0,5 h zudosiert. Nach 0,5 h Nachpolymerisation wird mit 253,8 Teile Butylacetat angelöst.

Die so erhaltene Copolymerisatlösung 3 hatte einen Festkörper (1 h 130°C) von 67,3 % und eine Viskosität von 1,65 dPa.s (50 %ig in Ethylglykolacetat bei 23°C). Mittels Gaschromatographie wurde unter gleichen Bedingungen wie bei der Copolymerisatlösung 1 der Restgehalt an freiem Vinylester-Monomeren in der 67,3 %igen Polymerisatlösung bestimmt. Es wurde ein Gehalt von 5,1 Gew.-% gefunden. Dies entspricht einem Restmonomerengehalt von 33 Gew.-%, bezogen auf die Gesamtmenge an eingesetztem Vinylester unter Berücksichtigung des theoretischen Festkörpers der Polymerisatlösung von 70 %.

## Vergleichsbeispiel 2

Analog zu der Verfahrensvorschrift gemäß der englischsprachigen technischen Information "Veo Va polymers LR-40 und LR-2041 for water-thinnable paints" der Firma Shell wurde folgendermaßen eine Copolymerisatlösung 4 hergestellt:

In einem 4-Liter-Edelstahlkessel mit Rührer, Rückflußkühler und Zulaufeinrichtungen werden vorgelegt und auf 150 - 155°C aufgeheizt

| | |
|---|---|
| 400,- | Teile eines handelsüblichen Gemisches von Vinylestern von ungesättigten, aliphatischen Monocarbonsäuren mit überwiegend 10 C-Atomen, die am α-C-Atom verzweigt sind. |
| 120,- | Teile Styrol |
| 421,4 | Teile Shellsol A® |
| 5,7 | Teile Di-tert. Butylperoxid |

In den Monomerenzulauf werden eingewogen und vermischt

| | |
|---|---|
| 480,- | Teile Styrol |
| 252,- | Teile n-Butylacrylat |
| 468,- | Teile Hydroxyethylmethacrylat |
| 144,- | Teile Methylmethacrylat |
| 36,- | Teile Methacrylsäure |

In den Initiatortank werden eingewogen und vermischt:

| | |
|---|---|
| 351,2 | Teile Shellsoll A® |
| 22,8 | Teile tert.-Butylperbenzoat |

Monomeren- und Initiatortank werden innerhalb von 4,5 h gleichmäßig zudosiert, während des Zulaufs wird die Temperatur auf 150 - 155°C gehalten. Danach werden innerhalb von 0,5 h aus dem Monomerentank

| | |
|---|---|
| 28,- | Teile n-Butylacrylat |
| 52,- | Teile Hydroxyethylmethacrylat |
| 16,- | Teile Methylmethacrylat |
| 4,- | Teile Methacrylsäure |

und aus dem Initiatortank

| | |
|---|---|
| 105,36 | Teile Shellsol A® |
| 5,52 | Teile tert.-Butylperbenzoat |

zudosiert. Nach 0,5 h werden drei Portionen à 4,8 Teilen tert.-Butylperbenzoat jeweils im Abstand von 0,5 h zugegeben. Zu 1.486,5 Teilen dieser so erhaltenen Copolymerisatlösung werden 41,9 Teile eines Monoisocyanates (Addukt aus 1 Mol Isophorondiisocyanat und 1 Mol Dimethylethanolamin, 50%ig in Xylol) gegeben und bei 60°C innerhalb 4 h an das Copolymer addiert. Es wird weiter mit 100,4 Teilen Butylacetat und 76,5 Teilen 1-Methoxypropylacetat-2 angelöst.

Die so erhaltene Copolymerisatlösung 4 hat einen Festkörper von 63,8 %, die Viskosität liegt original > 40 dPa.s (bei 23°C).

Der Gehalt an freiem Vinylester - Monomeren in der 64,8 %igen Lösung lag bei 1,5 - 2 Gew.-%. Dies entspricht einem Restmonomerengehalt von 11,5 bis 15,2 Gew.-%, bezogen auf die Gesamtmenge an eingesetztem Vinylester.

Die erhaltene Copolymerisatlösung 4 wird mit Methoxypropylacetat auf 62 % Festkörper verdünnt. Zu 54,35 Teilen einer Tönpaste auf Basis eines handelsüblichen OH-Acrylates (OH-Zahl 150 mg KOH/g) werden 45,65 Teile der Copolymerisatlösung 4 (62 % Festkörper) gegeben. Diese Stammlacklösung wird mit der Polyisocyanatlösung 1 analog Beispiel 2 im Volumenverhältnis 2 : 1 gemischt. Mit 22 Gew.-%, bezogen auf den Stammlack, der Lackverdünnung 1 wird eine Spritzviskosität von 18 s, gemessen im DIN 4 Auslaufbecher, eingestellt. Analog zu Beispiel 2 wurden mit diesem Lack 2 Glasaufzüge angefertigt und 30 min bei 60°C eingebrannt. Die Abprüfergebnisse zeigt Tabelle 1. Weiterhin wurde der Lack 2 analog Beispiel 2 auf phosphatierte und mit dem in Beispiel 2 beschriebenen Füller beschichtete Stahlbleche appliziert und 30 min bei 60°C eingebrannt. Die Abprüfergebnisse zeigt Tabelle 2.

Tabelle 1: Abprüfergebnisse der Glasaufzüge

|  | Lack 1 | Lack 2 Vergleich | Lack 3 | Lack 4 Vergleich |
|---|---|---|---|---|
| Pendelhärte nach König (s) | 157 | 134 | 151 | 141 |

Tabelle 2: Abprüfergebnisse der beschichteten Stahlbleche
Die Stahlbleche wurden nach dem Einbrennen
1 h bei Raumtemp. aufbewahrt und dann den
Prüfungen unterzogen.

|  | Lack 1 | Lack 2 Vergleich | Lack 3 | Lack 4 Vergleich |
|---|---|---|---|---|
| Schichtdicke trocken ($\mu$m) | 65 | 60 | 78 | 60 |
| Glanzgrad 60°, Gardner | 87° | 86° | 90° | 90° |
| Gitterschnitt (DIN 53151) nach 240 h Wassersprühtest[a] | Gt 1 | Gt 2 | — | — |
| Abklebetest [b] | 1. M. | 1. M. | 1.M. | 1. M. |
| DOI [c] | 91,8 | 92,3 | 87,3 | 84,9 |
| Trocknungszeit bei Raumtemper. bis zur Klebe- freiheit (min.) | - | - | 300 | 285 |

1. M.:leichte Markierung:

a: Dauerberieselung mit deionisiertem Wasser bei 20°C

b: Abkleben der Bleche mit Tesafilm. Nach 1 h Klebezeit entfernen des Tesafilms und Untersuchung auf evtl. vorhandener Markierung.

c: Distinctness of Reflected Image:

Bei Beleuchtung der zu beurteilenden Oberfläche unter 30°C wird die direkte Reflexion im Glanzwinkel - 30° und in unmittelbarer Nähe des Glanzwinkels bei - 30° ± 0.3° gemessen. Der hieraus ermittelte DOI-Wert korrespondiert mit der visuell empfundenen Schärfe des Spiegelbildes eines Gegenstandes auf dieser Oberfläche. Der DOI-Wert wird auch Bildschärfewert genannt.

```
Meßwerte: 100 = bester Wert
           0 = schlechtester Wert
```

| Meßgerät | Beleuchtung | Beobachtung |
|----------|-------------|-------------|
| DORIGON | 30° | - 30°, - 29,7°, 30,3° |
| D 47 R-6F der Firma Hunter-Lab | | |

### Beispiel 3

Die in Beispiel 2 hergestellte Copolymerisatlösung 2 (Festkörper 64,9 % (15′ 180°C) wird mit 1-Methoxypropylacetat-2 auf 62 % Festkörper verdünnt und mit den in Tabelle 3 angegebenen Komponenten zu einem Klarlack 3 verarbeitet. Der erhaltene Klarlack 3 wurde im Volumenverhältnis 2 : 1 mit der Polyisocyanatlösung 1 gemischt. Die resultierende Mischung wies eine Viskosität von 16 s (gemessen im DIN 4-Becher bei 23°C) auf. Nach 4 h Lagerung bei Raumtemperatur der Klarlackmischung war die Viskosität auf 28 s (DIN 4-Becher, 23°C), nach 6 h Lagerung bei Raumtemperatur auf 68 s (DIN 4-Becher, 23°C) angestiegen. Analog zu Beispiel 2 wurden von diesem Lack 3 Glasaufzüge angefertigt (Schichtdicke trocken 20 μm) und 30 min. bei 60°C eingebrannt. Die Abprüfergebnisse zeigt Tabelle 1.

Die Klarlackmischung 3 wurde außerdem direkt nach der Herstellung als Klarlack nach dem Naß-in-Naß-Verfahren auf einen handelsüblichen Basislack (Metallic-Basislack silber auf Basis Celluloseacetobutyrat, Polester, Melaminharz, Wachs) appliziert und 30 min bei 60°C eingebrannt. Der Basislack wiederum war zuvor auf phosphatierte und mit dem in Beispiel 2 beschriebenen Füller beschichtete Stahlbleche appliziert worden. Die Abprüfergebnisse zeigt Tabelle 2.

### Vergleichsbeispiel 3

Die in Vergleichsbeispiel 2 hergestellte Copolymerisatlösung 4 wird mit 1-Methoxypropylacetat-2 auf 62 % Festkörper verdünnt und analog Beispiel 3 mit den in Tabelle 3 angegebenen Komponenten zu einem Klarlack 4 verarbeitet. Der erhaltene Klarlack 4 wurde im Volumenverhältnis 2 : 1 mit der Polyisocyanatlösung 1 gemischt und mit 10 Vol.-%, bezogen auf den Klarlack 4, der Lackverdünnung 1 versetzt. Die resultierende Klarlackmischung wies eine Viskosität von 19 s (DIN 4-Becher, 23°C) auf. Nach 4 h Lagerung bei Raumtemperatur war die Viskosität der Mischung bereits so stark angestiegen (beginnende Gelierung), daß der Klarlack 4 nicht mehr verarbeitbar war.

Analog zu Beispiel 3 wurden von diesem Lack 4 Glasaufzüge angefertigt (Schichtdicke trocken 20 μm) und 30 min bei 60°C eingebrannt. Die Abprüfergebnisse zeigt Tabelle 1.

Außerdem wurde dieser Lack 4 direkt nach seiner Herstellung analog zu Beispiel 3 als Klarlack auf dem in Beispiel 3 beschriebenen Basislack nach dem Naß-in-Naß-Verfahren appliziert (Schichtaufbau analog Beispiel 3) und 30 min. bei 60°C eingebrannt.

Die Abprüfergebnisse zeigt Tabelle 2.

Zusätzlich wurde im Gegensatz zu Beispiel 3 eine Farbtonverschiebung des Basislackes durch den Klarlack

4 beobachtet.

## Tabelle 3: Zusammensetzungen der Klarlacke 3 und 4

|  | Klarlack 3 | Klarlack 4 |
|---|---|---|
| Copolymerisatlösung 2 | 75,7 Teile | – |
| Copolymerisatlösung 4 | – | 75,7 Teile |
| Xylol | 1,2 Teile | 1,2 Teile |
| Butylacetat | 14,1 Teile | 14,1 Teile |
| Solventnaphta® | 0,9 Teile | 0,9 Teile |
| Butylglykolacetat | 0,7 Teile | 0,7 Teile |
| Silikonöllösung | 3,7 Teile | 3,7 Teile |
| Katalysatorlösung$^a$ | 1,5 Teile | 1,5 Teile |
| Lichtschutzmittel (gehindertes Amin) | 1,2 Teile | 1,2 Teile |
| UV-Absorber (Benztriazol) | 1,0 Teile | 1,0 Teile |

a: die Katalysatorlösung besteht aus der Lösung von 1 Teil Dibutylzinndilaurat 50 Teilen Butylacetat, 44 Teilen Solventnaphtha® und 5 Teilen 3-Methoxybutylacetat.

## Patentansprüche

1.) Mittels radikalischer Lösungspolymerisation herstellbares hydroxylgruppenhaltiges und ggf. amino- und/oder carboxylgruppenhaltiges Copolymerisat (A) auf der Basis von Vinylestern, Vinylaromaten und Hydroxyalkyestern $\alpha,\beta$-ungesättigter Carbonsäuren und gegebenenfalls weiteren copolymerisierbaren Monomeren, dadurch gekennzeichnet, daß das Copolymerisat (A) eine OH-Zahl von 50 bis 200 mg KOH/g und ein mittleres Molekulargewicht (Zahlenmittel) von 1500 bis 6000 aufweist und herstellbar ist durch radikalische Lösungspolymerisation bei Temperaturen von 130 bis 200°C von

$a_1$) 5 bis 25 Gew.-% eines oder mehrerer Vinylester von Monocarbonsäuren,

$a_2$) 10 bis 50 Gew.-% eines oder mehrerer vinylaromatischer Kohlenwasserstoffe,

$a_3$) 10 bis 40 Gew.-% eines oder mehrerer Hydroxyalkylester $\alpha,\beta$-ungesättigter Carbonsäuren und/oder eines Umsetzungsprodukts aus 1 Mol Hydroxyethylacrylat und/oder Hydroxyethylmethacrylat und durchschnittlich 2 Mol $\varepsilon$-Caprolacton und/oder eines Umsetzungsprodukts aus Acrylsäure und/oder Methacrylsäure mit dem Glycidylester einer Carbonsäure mit einem tertiären $\alpha$-Kohlenstoffatom oder anstelle des Umsetzungsproduktes von Acryl- und/oder Methacrylsäure mit dem Glycidylester Acryl- und/oder Methacrylsäure, wobei die Acryl- und/oder Methacrylsäure in diesem Fall während oder nach der Polymerisationsreaktion mit dem Glycidylester einer Carbonsäure mit einem tertiären $\alpha$-Kohlenstoffatom umgesetzt wird,

$a_4$) 0 bis 40 Gew.-% anderer ethylenisch ungesättigter, copolymerisierbarer Monomerer, wobei die Summe der Komponenten $a_1$ bis $a_4$ jeweils 100 Gew.-% ergibt,

wobei bei Einsatz von Carbonsäure darauf zu achten ist, daß die Säurezahl des fertigen Polyacrylats im Bereich von 5 bis 30 mg KOH/g liegt und wobei

1.) mindestens 60 Gew.-% der Gesamtmenge der Komponente $a_1$ vorgelegt werden,

2.) die Komponenten $a_2$ bis $a_4$ und der ggf. vorhandene Rest der Komponente $a_1$ innerhalb eines für alle Komponenten gleich langen Monomerenzugabezeitraumes so zudosiert werden, daß

i) die pro Zeiteinheit zugegebene Menge der Komponente $a_1$ innerhalb des Monomerenzugabezeitraumes konstant bleibt oder abnimmt,

ii) die pro Zeiteinheit zugegebene Menge der Komponenten $a_3$ und $a_4$ innerhalb des Monomerenzug-

abezeitraumes konstant bleibt und

iii) die innerhalb des ersten Drittels des Monomerenzugabezeitraumes zugegebene Menge der Komponente $a_2$ 15 bis 30 Gew.-% der Gesamtmenge der Komponente $a_2$, innerhalb des zweiten Drittels 25 bis 40 Gew.-% und innerhalb des letzten Drittels 35 bis 60 Gew.-% der Gesamtmenge der Komponente $a_2$ beträgt.

2.) Hydroxylgruppenhaltiges Copolymerisat nach Anspruch 1, dadurch gekennzeichnet, daß es herstellbar ist durch radikalische Lösungspolymerisation unter Verwendung von 10 bis 19 Gew.-% eines oder mehrerer Vinylester von Monocarbonsäuren.

3.) Hydroxylgruppenhaltiges Copolymerisat nach Anspruch 1 oder 2, dadurch gekennzeichnet, daß als Komponente $a_1$ Vinylester von in $\alpha$-Stellung verzweigten Monocarbonsäuren mit 5 bis 15 C-Atomen je Molekül eingesetzt worden sind.

4.) Hydroxylgruppenhaltiges Copolymerisat nach einem der Ansprüche 1 bis 3, dadurch gekennzeichnet, daß als Komponente $a_1$ ein oder mehrere Vinylester von gesättigten aliphatischen Monocarbonsäuren mit 9-11 C-Atomen, die am $\alpha$-C-Atom verzweigt sind, eingesetzt worden sind.

5.) Hydroxylgruppenhaltiges Copolymerisat nach einem der Ansprüche 1 bis 4, dadurch gekennzeichnet, daß das hydroxylgruppenhaltige Copolymerisat (A) eine OH-Zahl von 70 bis 150 mg KOH/g aufweist und herstellbar ist durch radikalische Lösungspolymerisation von 15 bis 35 Gew.-% der Komponente $a_3$.

6.) Hydroxylgruppenhaltiges Copolymerisat nach einem der Ansprüche 1 bis 5, dadurch gekennzeichnet, daß das Copolymerisat (A) eine Aminzahl von 1 bis 10 mg KOH/g und/oder eine Säurezahl von 5 bis 30 mg KOH/g aufweist, wobei die tertiären Aminogruppen entweder durch Verwendung ungesättigter Verbindungen mit tertiären Aminogruppen als Komponente $a_4$ oder durch Umsetzung mit Verbindungen, die pro Molekül durchschnittlich 0,8 bis 1,5 freie Isocyanatgruppen und mindestens 1 tertiäre Aminogruppe enthalten, in das Polymer eingeführt worden sind und wobei die Säuregruppen durch Verwendung ungesättigter Carbonsäuren als Monomere in das Copolymerisat eingeführt worden sind.

7.) Hydroxylgruppenhaltiges Copolymerisat nach Anspruch 6, dadurch gekennzeichnet, daß das Copolymerisat (A) eine Aminzahl von 1 bis 5 mg KOH/g und/oder eine Säurezahl von 8 bis 25 mg KOH/g aufweist.

8.) Hydroxylgruppenhaltiges Copolymerisat nach Anspruch 6 oder 7, dadurch gekennzeichnet, daß die tertiären Aminogruppen durch Umsetzung mit Verbindungen, die pro Molekül durchschnittlich 1 freie Isocyanatgruppe und mindestens 1 tertiäre Aminogruppe enthalten, eingeführt worden sind.

9.) Verfahren zur Herstellung der hydroxylgruppenhaltigen und ggf. amino- und/oder carboxylgruppenhaltigen Copolymerisate (A) auf der Basis von Vinylestern, Vinylaromaten, Hydroxyalkylestern $\alpha,\beta$-ungesättigter Carbonsäuren und ggf. weiterer copolymerisierbarer Monomeren nach einem der Ansprüche 1 bis 8 mittels radikalischer Lösungspolymerisation, dadurch gekennzeichnet, daß die Monomeren $a_1$ bis $a_4$ in einem organischen Lösungsmittel bei Temperaturen von 130 bis 200°C unter Verwendung von Polymerisationsinitiatoren und ggf. Polymerisationsreglern copolymerisiert werden, wobei die Copolymerisation derart durchgeführt wird, daß

1.) mindestens 60 Gew.-% der Gesamtmenge der Komponente $a_1$ vorgelegt werden,

2.) die Komponenten $a_2$ bis $a_4$ und der ggf. vorhandene Rest der Komponente $a_1$ innerhalb eines für alle Komponenten gleich langen Monomerenzugabezeitraumes so zudosiert werden, daß

i) die pro Zeiteinheit zugegebene Menge der Komponente $a_1$ innerhalb des Monomerenzugabezeitraumes konstant bleibt oder abnimmt,

ii) die pro Zeiteinheit zugegebene Menge der Komponenten $a_3$ und $a_4$ innerhalb des Monomerenzugabezeitraumes konstant bleibt und

iii) die innerhalb des ersten Drittels des Monomerenzugabezeitraumes zugegebene Menge der Komponente $a_2$ 15 bis 30 Gew.-% der Gesamtmenge der Komponente $a_2$, innerhalb des zweiten Drittels 25 bis 40 Gew.-% und innerhalb des letzten Drittels 35 bis 60 Gew.-% der Gesamtmenge der Komponente $a_2$ beträgt.

10.) Verfahren nach Anspruch 9, dadurch gekennzeichnet, daß 100 Gew.-% der Gesamtmenge der Komponente $a_1$ vorgelegt werden.

11.) Verfahren nach Anspruch 9 oder 10, dadurch gekennzeichnet, daß die Monomeren bei Temperaturen von 150 bis 180°C copolymerisiert werden.

12.) Beschichtungsmittel, dadurch gekennzeichnet, daß es das hydroxylgruppenhaltige Copolymerisat (A) nach einem der Ansprüche 1 bis 8 als Bindemittel enthält.

13.) Beschichtungsmittel nach Anspruch 12, dadurch gekennzeichnet, daß es Polyisocyanate als Härter enthält.

14.) Verwendung der hydroxylgruppenhaltigen Copolymerisate (A) nach einem der Ansprüche 1 bis 8 als Bindemittel in Beschichtungsmitteln für die Autoreparaturlackierung.

15.) Verwendung der hydroxylgruppenhaltigen Copolymerisate (A) nach einem der Ansprüche 1 bis 8 als

EP 0 349 818 B1

Bindemittel in Klarlacken oder pigmentierten Decklacken.

**Claims**

1. A copolymer (A) containing hydroxyl groups and, if appropriate, amino and/or carboxyl groups, based on vinyl esters, vinylaromatic hydrocarbons and hydroxyalkyl esters of $\alpha,\beta$-unsaturated carboxylic acids and, if desired, other copolymerisable monomers, which can be prepared by free-radical solution polymerisation, characterised in that the copolymer (A) has a hydroxyl value of 50 to 200 mg of KOH/g, preferably 70 to 150 mg of KOH/g, and an average molecular weight (number average) of 1500 to 6000, and which can be prepared by free-radical solution polymerisation, at temperatures of 130 to 200°C, of

   $a_1$) 5 to 25 % by weight of one or more vinyl esters of monocarboxylic acids,

   $a_2$) 10 to 50 % by weight of one or more vinylaromatic hydrocarbons,

   $a_3$) 10 to 40 % by weight of one or more hydroxyalkyl esters of $\alpha,\beta$-unsaturated carboxylic acids and/or a reaction product obtained from 1 mol of hydroxyethyl acrylate and/or hydroxyethyl methacrylate and on average two mol of $\varepsilon$-caprolactone and/or a reaction product obtained from acrylic acid and/or methacrylic acid and the glycidyl ester of a carboxylic acid with one tertiary $\alpha$-carbon atom or, instead of the reaction product of acrylic and/or methacrylic acid and the glycidyl ester, acrylic and/or methacrylic acid, in this case the acrylic and/or methacrylic acid being reacted during or after the polymerisation reaction with the glycidyl ester of a carboxylic acid with a tertiary $\alpha$-carbon atom,

   $a_4$) 0 to 40 % by weight of other ethylenically unsaturated copolymerisable monomers, the sum of the components $a_1$ to $a_4$ always being 100 % by weight,

   in which in the case of carboxylic acid being used, care must be taken that the acid value of the finished polyacrylate is in the range from 5 to 30 mg of KOH/g and in which

   1.) at least 60 % by weight of the total amount of the component $a_1$ is initially used,

   2.) the components $a_2$ to $a_4$ and the remainder of the component $a_1$, if any, are added over a monomer addition period which is the same for all components in such a manner that

   i) the amount of the component $a_1$ added per unit time remains constant or decreases over the monomer addition period,

   ii) the amount of the components $a_3$ and $a_4$ added per unit time remains constant over the monomer addition period, and

   iii) the amount of the component $a_2$ added over the first third of the monomer addition period is 15 to 30 % by weight of the total amount of the component $a_2$, that added over the second third is 25 to 40 %, and that added over the last third is 35 to 60 % by weight of the total amount of the component $a_2$.

2. Copolymer containing hydroxyl groups according to Claim 1, characterised in that it can be produced by free-radical solution polymerisation using from 10 to 19 % by weight of one or more vinyl esters of monocarboxylic acids.

3. Copolymer containing hydroxyl groups according to Claim 1 or 2, characterised in that vinyl esters of monocarboxylic acids with 5 to 15 carbon atoms per molecule and which are branched in the $\alpha$-position have been used an component $a_1$.

4. Copolymer containing hydroxyl groups according to any of Claims 1 to 3 characterised in that one or more vinyl enters of saturated aliphatic monocarboxylic acids of 9 to 11 carbon atoms, branched at the $\alpha$-carbon atom, have been used an the component $a_1$.

5. Copolymer containing hydroxyl groups according to any of Claims 1 to 4, characterised in that the copolymer (A) containing hydroxyl groups has an OH value of 70 to 150 mg of KOH/g, and can be prepared by free-radical solution polymerisation of 15 to 35 % by weight of component $a_3$.

6. Copolymer containing hydroxyl groups according to any of Claims 1 to 5, characterised in that copolymer (A) has an amine value of 1 to 10 mg of KOH/g, the tertiary amino groups having been introduced into the polymer either by the use of unsaturated compounds with tertiary amino groups as component $a_4$ or by reacting with compounds which contain, on average, 0.8 to 1.5 free isocyanate groups and at least 1 tertiary amino group per molecule, and the acid groups having been introduced into the copolymer by the use of unsaturated carboxylic acids as monomers.

15

7. Copolymer containing hydroxyl groups according to Claim 6, characterised in that copolymer (A) has an amine value from 1 to 5 mg of KOH/g and/or an acid value from 8 to 25 mg of KOH/g.

8. Copolymer containing hydroxyl groups according to Claim 6 or 7, characterised in that the tertiary amino groups have been introduced by a reaction with compounds which contain on average 1 free isocyanate group and at least 1 tertiary amino group per molecule.

9. Process for the preparation of copolymers (A) containing hydroxyl groups and, if appropriate, amino and/or carboxyl groups, based on vinyl esters, vinyl aromatic hydrocarbons and hydroxyalkyl esters of $\alpha,\beta$-unsaturated carboxylic acids and, if desired, other copolymerisable monomers according to Claims 1 to 8 by free-radical solution polymerisation, characterised in that $a_1$ to $a_4$ monomers are copolymerised in an organic solvent at temperatures of 130 to 200°C, using polymerisation initiators and, if appropriate, polymerisation regulators, the copolymerisation being carried out in such a way that
    1.) at least 60 % by weight of the total amount of the component $a_1$ is initially used,
    2.) the components $a_2$ to $a_4$ and the remainder of the component $a_1$, if any, are added over a monomer addition period which is the same for all components in such a manner that
        i) the amount of the component $a_1$ added per unit time remains constant or decreases over the monomer addition period,
        ii) the amount of the components $a_3$ and $a_4$ added per unit time remains constant over the monomer addition period, and
        iii) the amount of the component $a_2$ added over the first third of the monomer addition period is 15 to 30 % by weight of the total amount of the component $a_2$, that added over the second third is 25 to 40 % by weight, and that added over the last third is 35 to 60 % of the total amount of the component $a_2$.

10. Process according to Claim 9, characterised in that 100 % by weight of the total amount of component $a_1$ is initially used.

11. Process according to Claim 9 or 10, characterised in that the monomers are copolymerised at temperatures from 150 to 180°C.

12. Coating composition characterised in that it contains as binder the copolymer (A) containing hydroxyl groups according to one of Claims 1 to 8.

13. Coating composition according to Claim 12, characterised in that it contains polyisocyanates as curing agents.

14. Use of the copolymer (A) containing hydroxyl groups according to one of Claims 1 to 8 as binder in coating compositions for automotive refinishing.

15. Use of the copolymer (A) containing hydroxyl groups according to one of Claims 1 to 8 as binder in clearcoat paints or pigmented topcoat paints.

## Revendications

1 - Copolymère (A) contenant des groupes hydroxyle et, le cas échéant, contenant des groupes amino et/ou carboxyle, susceptible d'être préparé par polymérisation radicalaire en solution, à base d'esters vinyliques, de monomères vinylaromatiques et d'esters hydroxyalkyliques d'acides carboxyliques à insaturation $\alpha,\beta$ et, le cas échéant, d'autres monomères copolymérisables, caractérisé par le fait que le copolymère (A) présente un indice d'OH de 50 à 200 mg de KOH/g et une masse moléculaire moyenne (moyenne en nombre) de 1500 à 6000, et qu'il est susceptible d'être préparé par polymérisation radicalaire en solution, à des températures de 130 à 200°C, à partir de :
    $a_1$) 5 à 25% en poids d'un ou plusieurs esters vinyliques d'acides monocarboxyliques ;
    $a_2$) 10 à 50% en poids d'un ou plusieurs hydrocarbures vinylaromatiques;
    $a_3$) 10 à 40% en poids d'un ou plusieurs esters hydroxyalkyliques d'acides carboxyliques à insaturation $\alpha,\beta$ et/ou un produit de réaction d'une mole d'acrylate d'hydroxyméthyle et/ou de méthacrylate d'hydroxyéthyle et, en moyenne, 2 moles d'$\varepsilon$-caprolactone et/ou un produit de réaction de l'acide acrylique et/ou de

16

l'acide méthacrylique avec l'ester glycidylique d'un acide carboxylique ayant un atome de carbone en α tertiaire ou, à la place du produit de réaction de l'acide acrylique et/ou méthacrylique avec l'ester glycidylique, l'acide acrylique et/ou méthacrylique, l'acide acrylique et/ou méthacrylique étant, dans ce cas, mis à réagir pendant ou après la réaction de polymérisation avec l'ester glycidylique d'un acide carboxylique ayant un atome de carbone en α tertiaire ;

$a_4$) 0 à 40% en poids d'autres monomères copolymérisables à insaturation éthylénique,

la somme des composants $a_1$) à $a_4$) s'élevant à chaque fois à 100% en poids,

où, en cas d'utilisation d'acide carboxylique, il faut veiller, à ce que l'indice d'acide du polyacrylate préparé se situe dans la plage de 5 à 30 mg de KOH/g, et où

1.) au moins 60% en poids de la quantité totale du composant $a_1$) sont chargés initialement ;

2.) les composants $a_2$) à $a_4$) et le reste éventuellement présent du composant $a_1$) sont ajoutés de façon dosée dans un intervalle de temps d'addition des monomères de longueur égale pour tous les composants, de telle sorte que :

i) la quantité ajoutée par unité de temps du composant $a_1$) reste constante ou diminue dans l'intervalle de temps d'addition des monomères ;

ii) la quantité ajoutée par unité de temps des composants $a_3$) et $a_4$) reste constante dans l'intervalle de temps d'addition des monomères ; et

iii) la quantité du composant $a_2$) ajoutée dans le premier tiers de l'intervalle de temps d'addition des monomères s'élève à 15 à 30% en poids de la quantité totale du composant $a_2$), celle ajoutée dans le deuxième tiers, à 25 à 40% en poids, et celle ajoutée dans le troisième tiers, à 35 à 60% en poids de la quantité totale du composant $a_2$).

2 - Copolymère contenant des groupes hydroxyle selon la revendication 1, caractérisé par le fait qu'il peut être préparé par polymérisation radicalaire en solution avec utilisation de 10 à 19% en poids d'un ou plusieurs esters vinyliques d'acides monocarboxyliques.

3 - Copolymère contenant des groupes hydroxyle selon l'une des revendications 1 et 2, caractérisé par le fait que, comme composant $a_1$), ont été utilisés des esters vinyliques d'acides monocarboxyliques ramifiés en position α, ayant 5 à 15 atomes de carbone par molécule.

4 - Copolymère contenant des groupes hydroxyle selon l'une quelconque des revendications 1 à 3, caractérisé par le fait que, comme composant $a_1$), ont été utilisés un ou plusieurs esters vinyliques d'acides monocarboxyliques aliphatiques saturés, ayant 9-11 atomes de carbone, qui sont ramifiés sur l'atome de carbone en α.

5 - Copolymère contenant des groupes hydroxyle selon l'une quelconque des revendications 1 à 4, caractérisé par le fait que le copolymère (A) contenant des groupes hydroxyle présente un indice d'OH de 70 à 150 mg de KOH/g, et peut être préparé par polymérisation radicalaire en solution de 15 à 35% en poids du composant $a_3$).

6 - Copolymère contenant des groupes hydroxyle selon l'une quelconque des revendications 1 à 5, caractérisé par le fait que le copolymère (A) présente un indice d'amine de 1 à 10 mg de KOH/g et/ou un indice d'acide de 5 à 30 mg de KOH/g, les groupes amino tertiaires ayant été introduits dans le polymère soit par utilisation de composés insaturés avec des groupes amino tertiaires comme composant $a_4$), soit par réaction avec des composés qui contiennent, par molécule, en moyenne 0,8 à 1,5 groupe isocyanate libre et au moins un groupe amino tertiaire, et les groupes acide ayant été introduits dans le copolymère par utilisation d'acides carboxyliques insaturés comme monomères.

7 - Copolymère contenant des groupes hydroxyle selon la revendication 6, caractérisé par le fait que le copolymère (A) présente un indice d'amine de 1 à 5 mg de KOH/g et/ou un indice d'acide de 8 à 25 mg de KOH/g.

8 - Copolymère contenant des groupes hydroxyle selon l'une des revendications 6 et 7, caractérisé par le fait que les groupes amino tertiaires ont été introduits par réaction avec des composés, qui contiennent, par molécule, en moyenne un groupe isocyanate libre et au moins un groupe amino tertiaire.

9 - Procédé de fabrication des copolymères (A) contenant des groupes hydroxyle et, le cas échéant, contenant des groupes amino et/ou carboxyle, à base d'esters vinyliques, de monomères vinylaromatiques, d'esters hydroxyalkyliques d'acides carboxyliques à insaturation α,β et, le cas échéant, d'autres monomères copolymérisables, tels que définis à l'une quelconque des revendications 1 à 8, par polymérisation radicalaire en solution, caractérisé par le fait que les monomères $a_1$) à $a_4$) sont copolymérisés dans un solvant organique à des températures de 130 à 200°C avec utilisation d'initiateurs de polymérisation et, le cas échéant, de régulateurs de polymérisation, la copolymérisation étant conduite de telle sorte que

1.) au moins 60% en poids de la quantité totale du composant $a_1$) sont chargés initialement ;

2.) les composants $a_2$) à $a_4$) et le reste éventuellement présent du composant $a_1$) sont ajoutés de façon dosée dans un intervalle de temps d'addition des monomères de longueur égale pour tous les composants, de telle sorte que :

i) la quantité ajoutée par unité de temps du composant $a_1$) reste constante ou diminue dans l'intervalle de temps d'addition des monomères ;

ii) la quantité ajoutée par unité de temps des composants $a_3$) et $a_4$) reste constante dans l'intervalle de temps d'addition des monomères ; et

iii) la quantité du composant $a_2$) ajoutée dans le premier tiers de l'intervalle de temps d'addition des monomères s'élève à 15 à 30% en poids de la quantité totale du composant $a_2$), celle ajoutée dans le deuxième tiers, à 25 à 40% en poids, et celle ajoutée dans le troisième tiers, à 35 à 60% en poids de la quantité totale du composant $a_2$).

10 - Procédé selon la revendication 9, caractérisé par le fait que 100% en poids de la quantité totale du composant $a_1$) sont chargés initialement.

11 - Procédé selon l'une quelconque des revendications 9 et 10, caractérisé par le fait que les monomères sont copolymérisés à des températures de 150 à 180°C.

12 - Agent de revêtement caractérisé par le fait qu'il contient, comme liant, le copolymère (A) contenant des groupes hydroxyle tel que défini à l'une quelconque des revendications 1 à 8.

13 - Agent de revêtement selon la revendication 12, caractérisé par le fait qu'il contient des polyisocyanates comme durcisseur.

14 - Utilisation du copolymère (A) contenant des groupes hydroxyle, tel que défini à l'une quelconque des revendications 1 à 8, comme liant dans des agents de revêtement pour le laquage de réparation des automobiles.

15 - Utilisation du copolymère (A) contenant des groupes hydroxyle, tel que défini à l'une quelconque des revendications 1 à 8, comme liant dans des laques transparentes ou des laques de recouvrement pigmentées.